(19) Europäisches Patentamt
European Patent Office
Office européen des brevets

(11) EP 2 106 576 B1

(12) **EUROPÄISCHE PATENTSCHRIFT**

(45) Veröffentlichungstag und Bekanntmachung des Hinweises auf die Patenterteilung:
**04.04.2012 Patentblatt 2012/14**

(21) Anmeldenummer: **07857886.1**

(22) Anmeldetag: **19.12.2007**

(51) Int Cl.:
***G05B 13/02*** *(2006.01)* ***G06N 3/02*** *(2006.01)*

(86) Internationale Anmeldenummer:
**PCT/EP2007/064265**

(87) Internationale Veröffentlichungsnummer:
**WO 2008/080864 (10.07.2008 Gazette 2008/28)**

(54) **VERFAHREN ZUR RECHNERGESTÜTZTEN STEUERUNG UND/ODER REGELUNG EINES TECHNISCHEN SYSTEMS**

METHOD FOR THE COMPUTER-ASSISTED CONTROL AND/OR REGULATION OF A TECHNICAL SYSTEM

PROCÉDÉ DE COMMANDE ET/OU DE RÉGULATION D'UN SYSTÈME TECHNIQUE ASSISTÉES PAR ORDINATEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.01.2007 DE 102007001025**

(43) Veröffentlichungstag der Anmeldung:
**07.10.2009 Patentblatt 2009/41**

(73) Patentinhaber: **Siemens Aktiengesellschaft**
**80333 München (DE)**

(72) Erfinder:
- **SCHÄFER, Anton Maximilian**
  **80801 München (DE)**
- **UDLUFT, Steffen**
  **82223 Eichenau (DE)**
- **ZIMMERMANN, Hans-Georg**
  **82319 Starnberg/Percha (DE)**

(56) Entgegenhaltungen:
- **LONG-JI LIN: "Reinforcement Learning for Robots Using Neural Networks" SCHOOL OF COMPUTER SCIENCE, CARNEGIE MELLON UNIVERSITY, 6. Januar 1993 (1993-01-06), XP002473299 Pittsburgh, PA 15213**
- **SEBASTIAN B. THRUN, KNUT MÖLLER, ALEXANDER LINDEN: "Planning with an Adaptive World Model" ADVANCES IN NEURAL INFORMATION PROCESSING SYSTEMS 3, TOURETZKY, D.S., LIPPMANN, R. (EDS.), [Online] 1991, XP002473300 SAN MATEO, CA Gefunden im Internet: URL:http: //www.ri.cmu.edu/pub_files/pub1/t hrun_ sebastian_1991_1/thrun_sebastian_1991 _1.pdf> [gefunden am 2008-03-18]**
- **JUN TANI: "Model-Based Learning for Mobile Robot Navigation from the Dynamical Systems Perspective" IEEE TRANS. SYSTEM, MAN AND CYBERNETICS (PART B), SPECIAL ISSUE ON LEARNING AUTONOMOUS ROBOTS, Bd. 26, 1996, Seiten 421-436, XP002473301**
- **ARIE H; OGATA T; JUN TANI; SUGANO S: "Reinforcement learning of a continuous motor sequence with hidden states" KLUWER ACADEMIC PUBLISHERS, Bd. 21, Nr. 10, 14. August 2007 (2007-08-14), XP009097423 NL ISSN: 0169-1864**
- **ZHOU ET AL: "Fault detection and classification in chemical processes based on neural networks with feature extraction" ISA TRANSACTIONS, INSTRUMENT SOCIETY OF AMERICA. PITTSBURGH, US, Bd. 42, Nr. 4, Oktober 2003 (2003-10), Seiten 651-664, XP005835325 ISSN: 0019-0578**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- XIAOFENG ZHUANG ET AL: "A novel approach for modeling cracking furnace severity" INTELLIGENT CONTROL AND AUTOMATION, 2004. WCICA 2004. FIFTH WORLD CONGRESS ON HANGZHOU, CHINA 15-19 JUNE 2004, PISCATAWAY, NJ, USA,IEEE, US, Bd. 1, 15. Juni 2004 (2004-06-15), Seiten 250-253, XP010729576 ISBN: 0-7803-8273-0

## Beschreibung

Die Erfindung betrifft ein Verfahren zur rechnergestützten Steuerung und/oder Regelung eines technischen Systems und ein entsprechendes Computerprogrammprodukt.

Bei der Steuerung von komplexen technischen Systemen ist es oftmals wünschenswert, dass die am technischen System durchzuführenden Aktionen derart gewählt sind, dass ein vorteilhaftes gewünschtes dynamisches Verhalten des technischen Systems erhalten wird. Das dynamische Verhalten kann jedoch bei komplexen technischen Systemen oftmals nicht einfach vorhergesagt werden, so dass entsprechende rechnergestützte Vorhersageverfahren benötigt werden, um das zukünftige Verhalten des technischen Systems abzuschätzen und dementsprechend geeignete Aktionen zur Regelung bzw. Steuerung des technischen Systems zu wählen.

Heutzutage beruht die Steuerung von technischen Systemen oftmals auf Expertenwissen, d.h. die automatische Regelung des Systems wird auf der Basis dieses Expertenwissens erstellt. Es sind jedoch auch Ansätze bekannt, bei denen mit Hilfe von bekannten Methoden des sog. bestärkenden Lernens (Reinforcement Learning, siehe Dokument [2]) technische Systeme gesteuert werden. Die bekannten Verfahren sind jedoch nicht allgemein auf beliebige technische Systeme anwendbar und liefern oftmals keine ausreichend guten Ergebnisse.

Die Druckschrift [3] beschreibt bestärkende Lernverfahren für neuronale Netze. Es werden unter anderem rekurrente Netzstrukturen offenbart, bei denen vergangene Merkmale, welche durch ein rekurrentes neuronales Netz ausgegeben werden, in ein weiteres neuronales Netz einfließen.

Aufgabe der Erfindung ist es, ein Verfahren zur rechnergestützten Vorhersage des dynamischen Verhaltens eines technischen Systems zu schaffen, welches allgemeingültig auf beliebige technische Systeme anwendbar ist und gute Ergebnisse liefert.

In dem erfindungsgemäßen Verfahren wird Information über das dynamische Verhalten des technischen Systems für mehrere Zeitpunkte jeweils durch einen Zustand des technischen Systems und einer am technischen System durchgeführten Aktion gewonnen, wobei eine jeweilige Aktion zu einem jeweiligen Zeitpunkt in einem neuen Zustand des technischen Systems zum nächsten Zeitpunkt führt. Das technische System kann hierbei beliebig ausgestaltet sein, so dass die Zustände beliebige messbare Parameter des technischen Systems sein können. Die Aktionen sind hierbei beliebige Veränderungen am technischen System, welche durch die Veränderungen von entsprechenden Stellgrößen am technischen System charakterisiert sind. Ein Zustand wird hierbei vorzugsweise durch eine Vielzahl von Umgebungs- bzw. Zustandsvariablen charakterisiert, wobei jede Zustandsvariable eine bestimmte Messgröße des technischen Systems darstellt. Der Zustand ist somit oftmals ein Zustandsvektor. Analog umfasst die Aktion ggf. eine Mehrzahl von zu verändernden Stellgrößen, welche jeweils einen Eintrag in einem entsprechenden Aktionsvektor bilden.

In dem erfindungsgemäßen Verfahren wird in einem ersten Schritt das dynamische Verhalten des technischen Systems mit einem rekurrenten neuronalen Netz mit Hilfe von Trainingsdaten umfassend bekannte Zustände und Aktionen zu mehreren Zeitpunkten modelliert. Das rekurrente neuronale Netz ist hierbei gebildet durch wenigstens eine Eingangsschicht umfassend die Zustände des technischen Systems und die am technischen System durchgeführten Aktionen zu den mehreren Zeitpunkten, wenigstens eine versteckte rekurrente Schicht umfassend versteckte Zustände und wenigstens eine Ausgangsschicht umfassend die Zustände des technischen Systems zu den mehreren Zeitpunkten. Die Rekurrenz in dem neuronalen Netz entsteht hierbei durch die zeitliche Entwicklung des Systems, welche sich in der versteckten Schicht durch die Kopplung von versteckten Zuständen zu unterschiedlichen Zeitpunkten widerspiegelt.

Anschließend wird in einem zweiten Schritt eine Aktionsauswahlregel gelernt. Das Lernen erfolgt hierbei derart, dass das rekurrente neuronale Netz, welches im ersten Schritt mit den Trainingsdaten trainiert wurde, für einen aktuellen und zukünftige Zeitpunkte mit einem weiteren neuronalen Netz gekoppelt wird, wobei das weitere neuronale Netz wenigstens eine Eingangsschicht, wenigstens eine versteckte Schicht umfassend versteckte Zustände und wenigstens eine Ausgangsschicht umfasst. Die Eingangsschicht des weiteren neuronalen Netzes umfasst dabei zu einem jeweiligen Zeitpunkt wenigstens einen Teil der versteckten Zustände des rekurrenten neuronalen Netzes zu dem jeweiligen Zeitpunkt und die Ausgangsschicht des weiteren neuronalen Netzes umfasst zu einem jeweiligen Zeitpunkt die am technischen System durchgeführte Aktion zu dem jeweiligen Zeitpunkt. Das weitere neuronale Netz übernimmt somit die Aufgabe der optimalen Steuerung des technischen Systems im Hinblick auf die zukünftigen Aktionen unter Berücksichtigung der modellierten Dynamik des technischen Systems, welche im ersten Schritt durchgeführt wurde.

In einer bevorzugten Ausführungsform wird die Aktionsauswahlregel gemäß einer Bewertungsfunktion gelernt, welche ein oder mehrere Kriterien in Bezug auf die Zustände des technischen Systems und/oder die am technischen System durchgeführten Aktionen berücksichtigt und/oder welche im Schritt der Modellierung des dynamischen Verhaltens des technischen Systems gelernt wird.

Schließlich werden in dem erfindungsgemäßen Verfahren mit dem rekurrenten neuronalen Netz, welches mit dem weiteren neuronalen Netz gekoppelt ist und mit dem die Aktionsauswahlregel gelernt wurde, am technischen System durchzuführende, vorzugsweise optimale Aktionen bestimmt. Auf der Basis der ermittelten Aktionen kann das technische System dann entsprechend geregelt bzw. gesteuert werden. Es hat sich hierbei gezeigt, dass eine derartige Netzwerkarchitektur ein dateneffizientes Lernen des dynamischen Verhaltens eines technischen Systems ermöglicht.

Die Dateneffizienz ist hierbei von hoher Bedeutung, da in den meisten technischen Systemen das verfügbare bzw. relevante Datenmaterial stark limitiert ist. In der speziellen Beschreibung wurde das erfindungsgemäße Verfahren mit bekannten Lernverfahren am Beispiel des Cart-Pole-Problems verglichen und es hat sich gezeigt, dass das erfindungsgemäße Verfahren im Vergleich zu den bekannten Verfahren sehr gute Ergebnisse liefert.

In einer besonders bevorzugten Ausführungsform wird als weiteres neuronales Netz in dem erfindungsgemäßen Verfahren ein Feed-Forward-Netz eingesetzt, bei dem die Neuronen der versteckten Schichten zeitlich nicht rückgekoppelt sind.

In einer weiteren Variante der Erfindung wird die Bewertungsfunktion derart gewählt, dass sie ein optimales dynamisches Verhalten des technischen Systems parametrisiert. Auf diese Weise kann durch entsprechende Wahl der Bewertungsfunktion die optimale Steuerung des technischen Systems realisiert werden. Hierbei kann die Bewertungsfunktion beispielsweise durch eine zu optimierende Kostenfunktion repräsentiert werden.

Wie im Vorangegangenen bereits dargelegt, umfassen die Zustände des technischen Systems und die Aktionen vorzugsweise mehrere Variablen. Analog bestehen die versteckten Zustände des rekurrenten bzw. des Weiteren neuronalen Netzes vorzugsweise auch aus mehreren versteckten Variablen. Insbesondere ist hierbei die Anzahl der versteckten Variablen eines versteckten Zustands des rekurrenten und/oder des Weiteren neuronalen Netzes kleiner als die Anzahl der Umgebungsvariablen eines Zustands des technischen Systems. Die Anzahl der versteckten Zustände wird dabei vorzugsweise derart gewählt, dass das Verfahren zum einen dateneffizient ist und zum anderen dennoch gute Ergebnisse liefert.

Bei der Modellierung des dynamischen Verhaltens des technischen Systems durch das rekurrente neuronale Netz im ersten Schritt des erfindungsgemäßen Verfahrens wird in einer besonders bevorzugten Ausführungsform der Fehler zwischen den durch das rekurrente neuronale Netz bestimmten Zuständen und den Zuständen der Trainingsdaten minimiert.

In einer besonders bevorzugten Ausführungsform wird das erfindungsgemäße Verfahren dazu verwendet, um mit dem Verfahren ein nichtlineares dynamisches Verhalten eines technischen Systems zu modellieren und/oder um eine nichtlineare Aktionsauswahlregel zu lernen.

In einer weiteren Ausgestaltung des erfindungsgemäßen Verfahrens wird zur Modellierung des dynamischen Verhaltens des technischen Systems mit dem rekurrenten neuronalen Netz im ersten Schritt des Verfahrens und/oder zum Lernen der Aktionsauswahlregel im zweiten Schritt des Verfahrens ein Backpropagation-Verfahren eingesetzt. Solche Backpropagation-Verfahren sind hinlänglich aus dem Stand der Technik bekannt und es wird hierbei insbesondere das in der Druckschrift [1] beschriebene Verfahren verwendet.

Das rekurrente neuronale Netz, mit dem das dynamische Verhalten des technischen Systems modelliert wird, ist vorzugsweise ein Netz mit dynamisch konsistenter zeitlicher Entfaltung unter Berücksichtigung zukünftiger Zustände und Aktionen, welches im Englischen als "Recurrent Neural Network with Dynamically Consistent Overshooting" bezeichnet wird. In einem solchen Netz werden die eigenen Vorhersagen des Netzes in der Ausgangsschicht als ein Ersatz für künftige Eingaben in der Eingangsschicht verwendet.

In einer besonders bevorzugten Ausführungsform des erfindungsgemäßen Verfahrens wird die Modellierung des technischen Systems mit dem rekurrenten neuronalen Netz durch folgende Gleichungen repräsentiert:

$$s_\tau = \tanh(\mathbf{I}p_\tau + Da_\tau + \theta)$$

$$x_{\tau+1} = Cs_\tau$$

mit

$$p_\tau = As_{\tau-1} + Bx_\tau$$

$$\sum_t \sum_\tau (x_\tau - x_\tau^d)^2 \rightarrow \min_{A,B,C,D,\theta}$$

wobei der Wertebereich von $\tau$ eine vorbestimmte Anzahl m von Zeitschritten vor dem Zeitpunkt t und eine vorbestimmte Anzahl n von Zeitschritten nach dem Zeitpunkt t umfasst;
wobei $t \in \{m,...,T-n\}$, wobei T die Anzahl an Zeitpunkten, für welche Trainingsdaten vorliegen;
wobei $X_\tau$ den durch das rekurrente neuronale Netz bestimmten Zustand des technischen Systems zum Zeitpunkt $\tau$ repräsentiert;
wobei $x_\tau^d$ den Zustand des technischen Systems zum Zeitpunkt $\tau$ gemäß den Trainingsdaten repräsentiert;
wobei $a_\tau$ die Aktion zum Zeitpunkt $\tau$ repräsentiert;
wobei $S_\tau$ und $p_\tau$ den versteckten Zustand zum Zeitpunkt $\tau$ der versteckten Schicht des rekurrenten neuronalen Netzes repräsentieren;
wobei **1** die Einheitsmatrix und A, B, C, D zu bestimmende Matrizen und $\theta$ ein zu bestimmender Bias sind.

Als Ergebnis erhält man mit Hilfe der Gleichungen die entsprechenden Matrizen A, B, C, D und den entsprechenden Bias $\theta$, welche derart gewählt sind, dass der quadratische Fehler zwischen vorhergesagten und tatsächlichen Zuständen minimiert ist.

Im zweiten Schritt werden schließlich die Matrizen A, B, C und D sowie der Parameter $\theta$ festgehalten, und das Lernen der Belohnungsregel wird dann vorzugsweise mit Hilfe folgender Gleichungen durchgeführt:

$$s_\tau = \tanh(\mathbf{I}p_\tau + Da_\tau + \theta)$$

$$R_{\tau+1} = Gh(Cs_\tau) \quad \text{für alle } \tau > t$$

mit

$$p_\tau = As_{\tau-1} + Bx_\tau$$

und

$$a_\tau = f(F\tanh(Ep_\tau + b)) \quad \text{für alle } \tau > t$$

$$\sum_t \sum_{\tau > t} c(R_\tau) \rightarrow \min_{E,F,b}$$

wobei $G$ eine Matrix und h eine beliebige Aktivierungsfunktion ist, welche den Zustand $X_{\tau+1}$ des technischen Systems auf einen für die Kostenfunktion $c(\cdot)$ relevanten Zustand $R_{\tau+1}$ abbilden;

wobei f eine beliebige Aktivierungsfunktion ist;

wobei E und F zu bestimmende Matrizen und b ein zu bestimmender Bias sind.

Wie bereits erwähnt, können die Funktionen f und h beliebige Aktivierungsfunktionen sein, insbesondere können sie auch die Identitätsabbildung darstellen.

Das erfindungsgemäße Verfahren kann für beliebige technische Systeme eingesetzt werden. Ein Anwendungsfall ist z.B. eine Turbine, insbesondere eine Gasturbine.

Die Steuerung des technischen Systems erfolgt derart, dass am Anfang der Steuerung zunächst alle Schritte des erfindungsgemäßen Verfahrens bis auf den eigentlichen Aktionsauswahlschritt durchgeführt werden und anschließend das sich daraus ergebende mit dem weiteren neuronalen Netz gekoppelte rekurrente neuronale Netz mit gelernter Aktionsauswahlregel zur Auswahl der Aktionen, die zur Steuerung des technischen Systems durchgeführt werden, eingesetzt wird. Die Steuerungsregeln werden somit einmal festgelegt und während des Steuerns des technischen Systems nicht mehr verändert.

Alternativ ist es auch möglich, dass während der Durchführung der Steuerung des technischen Systems in regelmäßigen Abständen alle Schritte des erfindungsgemäßen Verfahrens (außer der eigentlichen Aktionsauswahl) durchgeführt werden, wobei bei der Durchführung dieser Schritte die sich während der Steuerung neu ergebenden Zustände und Aktionen als neue und/oder weitere Trainingsdaten berücksichtigt werden. Nach der Durchführung dieser Schritte des erfindungsgemäßen Verfahrens wird anschließend dann das sich daraus ergebende, mit dem weiteren neuronalen Netz gekoppelte rekurrente neuronale Netz mit gelernter Aktionsauswahlregel zur Auswahl weiterer Aktionen verwendet. Auf diese Weise wird ein Online-Lernen der Regelung während der Steuerung des technischen Systems gewährleistet.

Neben dem oben beschriebenen Verfahren umfasst die Erfindung ferner ein Computerprogrammprodukt mit einem auf einem maschinenlesbaren Träger gespeicherten Programmcode zur Durchführung des erfindungsgemäßen Steuerungsverfahrens, wenn das Programm auf einem Rechner abläuft.

Ausführungsbeispiele der Erfindung werden nachfolgend anhand der beigefügten Figuren detailliert beschrieben.

Es zeigen:

| | |
|---|---|
| Fig. 1 | eine schematische Darstellung, welche die Modellierung eines technischen Systems mit einem rekurrenten neuronalen Netz gemäß einer Ausführungsform der Erfindung zeigt; |
| Fig. 2 | eine schematische Darstellung, welche das Lernen einer Aktionsauswahlregel durch das rekurrente neuronale Netz der Fig. 1 in Kombination mit einem Feed-Forward-Netz gemäß einer Ausführungsform der Erfindung wiedergibt; |
| Fig. 3 | eine schematische Darstellung, welche das Cart-Pole-Problem zeigt, mit dem eine Ausführungsform des erfindungsgemäßen Verfahrens getestet wurde; |
| Fig. 4 | eine Tabelle, welche Ergebnisse des erfindungsgemäßen Verfahrens für das Cart-Pole-Problem mit Ergebnissen anderer Verfahren vergleicht; |
| Fig. 5 und Fig. 6 | Diagramme, welche die Ergebnisse gemäß der Tabelle aus Fig. 4 graphisch wiedergeben. |

Nachfolgend wird das erfindungsgemäße Verfahren detailliert beschrieben. Das Verfahren ist hierbei auf jede beliebige Art von technischem System anwendbar, dessen dynamisches Verhalten sich durch einen Zustandsraum X und einen Aktionsraum A mit einer (stochastischen) Übergangsfunktion $P(x_t, a_t, x_{t+1})$ beschreiben lässt. Hierbei sind $x_t$, $x_{t+1} \in X$ Zustände des technischen Systems zu den Zeitpunkten t bzw. t+1, wobei jeder Zustand durch eine Mehrzahl von Zustand- bzw. Umgebungsvariablen charakterisiert ist. Diese Umgebungsvariablen sind dabei messbare Zustandsgrößen des technischen Systems, beispielsweise der Gasdruck, die Gastemperatur, Brennkammerbeschleunigungen und dergleichen in einer Gasturbine. Die Aktionen $a_t \in A$ sind hierbei Veränderungen von Stellgrößen des technischen Systems zum Zeitpunkt t, welche wiederum Einfluss auf spätere Zustände des technischen Systems haben. Analog zum Zustand $x_t$ kann auch die Aktion $a_t$ eine Mehrzahl von Aktionsvariablen umfassen, und eine Aktion kann somit durch die Veränderung von mehreren Stellgrößen charakterisiert sein. Ein Beispiel von einer an einem technischen System veränderbarer Stellgröße ist die Einstellung von Ventilen in einer Gasturbine. Oftmals sind die technischen Systeme auch so ausgelegt, dass sich der Zustandsraum und der Aktionsraum überschneiden, d.h. dass eine Stellgröße im technischen System auch den Zustand des technischen Systems charakterisiert.

Die obige Beschreibung des technischen Systems mit Hilfe eines Zustandsraums X, eines Aktionsraums A und einer stochastischen Übergangsfunktion P entspricht dem aus der Stand der Technik bekannten Markov Entscheidungsprozess MDP (MDP = Markov Decision Process). Es wird somit davon ausgegangen, dass das technische System

mit einem solchen Prozess beschrieben werden kann. Für diesen Prozess existiert eine Belohnungs- oder Kostenfunktion c: X x A $\rightarrow$ R, wobei R den Raum der Belohnungen darstellt, welche das System für die Wahl einer Aktion $a_t$ im Zustand $x_t$ erhält. Es ist nunmehr das Ziel, eine optimale Regel $\Pi$:X $\rightarrow$ A zu bestimmen, welche die erwartete kumulierte oder durchschnittliche Belohnungsfunktion c für jeden Zustand $x_t$ maximiert. Das Maximieren der Belohnungsfunktion c entspricht dabei einer möglichen Ausgestaltung einer Aktionsauswahlregel, wie sie in den Ansprüchen definiert ist. Die Belohnungsfunktion wird insbesondere so festgelegt, dass sie erwünschte Eigenschaften des technischen Systems widerspiegelt, wobei das Optimum dann erreicht wird, wenn die Funktion maximal ist. Im einfachsten Fall könnte die Kostenfunktion beispielsweise ein vorteilhafter gewünschter Zustand des technischen Systems sein, der dann optimal ist, wenn er einen Maximalwert aufweist. Im Folgenden wird davon ausgegangen, dass das technische System ein deterministischer Markov Entscheidungsprozess mit diskreten Zeitschritten ist, wobei die Zustandsräume X und A kontinuierlich sind.

Gemäß der Erfindung wird ein Markov Entscheidungsprozess mit einem rekurrenten neuronalen Netz RNN modelliert, wodurch eine Abbildung des dynamischen Verhaltens des technischen Systems, d.h. der Übertragungsfunktion P(·) durch eine hochdimensionale nichtlineare Systemgleichung abgebildet wird. Das in der hier beschriebenen Variante der Erfindung verwendete rekurrente neuronale Netz RNN ist dabei in Fig. 1 gezeigt. Das rekurrente neuronale Netz umfasst eine Eingangsschicht I, welche die Zustände und die Aktionen zu den einzelnen Zeitpunkten zeigt. Beispielhaft sind in Fig. 1 die Zustände $x_{t-1}$, $x_t$ sowie die Aktionen $a_{t-1}$, $a_t$, $a_{t+1}$ wiedergegeben. Die Eingangsschicht ist mit einer versteckten Schicht H über entsprechende Matrizen B und D gekoppelt, welche nachfolgend noch näher definiert sind. Die versteckte Schicht weist versteckte Zustände für jeden Zeitpunkt auf, wobei in Fig. 1 beispielhaft die Zustände $p_{t-1}$, $s_{t-1}$, $P_t$, $s_t$, $P_{t+1}$ und $s_{t+1}$ wiedergegeben sind. Die versteckte Schicht H ist hierbei rekurrent, da die einzelnen versteckten Zustände miteinander gekoppelt sind, was durch entsprechende Matrizen **I** (entspricht der Einheitsmatrix) und A sowie einem Bias $\theta$ in Fig. 1 wiedergegeben ist. Das rekurrente neuronale Netz der Fig. 1 weist ferner eine Ausgangsschicht O auf, welche durch die Zustände des technischen Systems gebildet ist, wobei in Fig. 1 die Zustände $x_t$, $x_{t+1}$ und $x_{t+2}$ wiedergegeben sind. Diese Zustände sind hierbei mit den versteckten Zuständen $s_{t-1}$, $s_t$ und $s_{t+1}$ jeweils durch eine Matrix C gekoppelt.

Das neuronale Netz gemäß Fig. 1 ist ein Netz mit dynamisch konsistenter zeitlicher Entfaltung unter Berücksichtigung zukünftiger Zustände, was im Englischen bezeichnet wird als "Neural Network with Dynamically Consistent Overshooting". Dies bedeutet, dass bei der Modellierung des neuronalen Netzes nicht nur Zeitpunkte $\tau$ in der Vergangenheit, sondern auch Zeitpunkte $\tau$ in der Zukunft berücksichtigt werden und die eigenen vorhergesagten Zustände des Netzes in der Ausgangsschicht als Eingaben für künftige Zustände in der Eingangsschicht verwendet werden. Der Parameter $\tau$ wird begrenzt durch die Länge der zurückliegenden Entfaltung m und der Länge des so genannten Overshootings n, so dass gilt: $\tau \in \{t-m,...,t+n\}$ für alle betrachteten Zeitpunkte $t \in \{m,...,T-n\}$, wobei T die Anzahl an zur Verfügung stehenden Zeitpunkten repräsentiert, für die Träiningsdaten zum Lernen des neuronalen Netzes vorliegen. Das Overshooting ergibt sich aus Fig. 1 dadurch, dass auch zukünftige Zeitpunkte $\tau > t$ bei der Modellierung des technischen Systems durch das neuronale Netz berücksichtigt werden. Da diese zukünftigen Zeitpunkte nicht bekannt sind, werden die über das Netz in der Ausgangsschicht ausgegebenen Zustände auch wieder als Eingabe für den nächsten Zeitschritt verwendet. Dies ist in Fig. 1 für den Zeitpunkt t+1 gezeigt, bei dem der ausgegebene Zustand $x_{t+1}$ wiederum den versteckten Zustand $p_{t+1}$ der versteckten Schicht zugeführt wird.

In der hier beschriebenen Ausführungsform der Erfindung wird somit eine Sequenz an Zuständen $x_\tau$ und Aktionen $a_\tau$ auf der Eingangsseite des rekurrenten neuronalen Netzes geschaffen, wobei das Netz zeitlich in einem vorgegebenen Intervall, welches die Vergangenheit und die Zukunft berücksichtigt, entfaltet ist. Mathematisch lässt sich das rekurrente neuronale Netz der Fig. 1 durch die folgenden Gleichungen beschreiben, wobei in den Gleichungen die oben erwähnten Matrizen **I**, A, B, C, D sowie der Bias $\theta$ enthalten sind:

$$s_\tau = \tanh(\mathbf{I}p_\tau + Da_\tau + \theta)$$

$$x_{\tau+1} = Cs_\tau$$

mit

$$p_\tau = As_{\tau-1} + Bx_\tau$$

Der Zustand $p_\tau$ wird hierbei als Prä-Zustand bezeichnet, der die Information von einem vorhergehenden versteckten Zustand $s_{\tau-1}$ und von dem externen Zustand $x_\tau$ aggregiert. Der Nichtlinearität in der versteckten Schicht wird hierbei mit dem Tangens Hyperbolicus ausgedrückt. Der Prä-Zustand $p_\tau$ weist die gleiche Dimension wie der versteckte Zustand $s_\tau$ auf und ist mit diesem über die Identitätsmatrix **I** verbunden, welche während des Trainings des neuronalen Netzes nicht gelernt wird. Der versteckte Zustand $s_\tau$ weist als Eingang eine Aktion $a_\tau$ auf und wird zur Berechnung des erwarteten nächsten Zustands $x_{\tau+1}$ des technischen Systems verwendet. Die Matrix D ist eine zusätzliche Matrix mit geeigneter Dimension, welche den Einfluss der Aktionen $a_\tau$ auf den Zustand $s_\tau$ berücksichtigt. Die Aktionen $a_\tau$ werden dem neuronalen Netz RNN auch als zukünftige Eingaben ($\tau > t$) bereitgestellt, da sie die Dynamik des technischen Systems nicht direkt beeinflussen und deshalb nicht durch das Netz gelernt werden sollten. Um eine Vielzahl von möglichen Zuständen in dem Zustandsraum X des technischen Systems abzudecken, sollte das rekurrente neuronale Netz zur Modellierung des technischen Systems mit Trainingsdaten modelliert werden, bei denen die Aktionen $a_\tau$ zufällig gewählt sind. Ansonsten kann die gelernte Dynamik u.U. abhängig von einer bestimmten Regel sein.

Ziel des erfindungsgemäßen Verfahrens ist es nunmehr, ein mit Trainingsdaten gelerntes neuronales Netz der Fig. 1 mit einem bestärkenden Lernen (Reinforcement Learning) zum Erlernen der oben genannten optimalen Regel $\Pi$ zu kombinieren. Dies wird erfindungsgemäß dadurch erreicht, dass das rekurrente neuronale Netz der Fig. 1 mit einem weiteren sog. Kontrollnetz kombiniert wird, wodurch die obige Belohnungsfunktion c in dem neuronalen Netz implementiert wird.

In der hier beschriebenen Ausführungsform ist das zusätzliche Kontrollnetz ein dreischichtiges neuronales Feed-Forward-Netz mit einer Eingangsschicht, einer versteckten Schicht und einer Ausgangsschicht. Auch wenn weitere, komplexere Topologien möglich wären, kann mit dem hier beschriebenen Modell jede beliebige Art von Kontrollfunktion modelliert werden. Da die optimale Aktion $a_\tau$ vorhergesagt werden soll, wird das Kontrollnetz nur für in der Zukunft liegende Zeitpunkte (d.h. $\tau > t$) mit dem rekurrenten neuronalen Netz gekoppelt. Für die vergangene zeitliche Entfaltung (d.h. $\tau < t$) werden in dem rekurrenten neuronalen Netz die zuvor zugeführten Aktionen verwendet.

Fig. 2 zeigt das mit dem weiteren Feed-Forward-Netz gekoppelte rekurrente neuronale Netz, welches nachfolgend auch als RCNN (RCNN = Recurrent Control Neural Network) bezeichnet wird. Die Teile des Netzes, welche sich auf das Feed-Forward-Kontrollnetz beziehen, sind hierbei gestrichelt dargestellt. Das Kontrollnetz verwendet als Eingangsschicht die versteckten Zustände $p_t$, $p_{t+1}$,..., usw., welche mit einer versteckten Schicht R mit entsprechenden Zuständen $r_t$, $r_{t+1}$ usw. gekoppelt sind. Die versteckten Zustände $r_\tau$ sind hierbei mit den Zuständen $p_\tau$ über eine Matrix E sowie einen Bias b gekoppelt, d.h. es gilt:

$$r_\tau = \tanh(Ep_\tau + b)$$

Die versteckten Zustände $r_\tau$ sind ferner über eine Matrix F mit den zu modellierenden künftigen Aktionen $a_\tau$ gekoppelt. Darüber hinaus existiert eine Matrix G, welche zukünftige Zustände $X_{t+1}$ $X_{t+2}$ usw. mit Zuständen $R_{t+1}$, $R_{t+2}$ usw. koppelt, wobei letztere für die Berechnungsregel relevante Zustände sind.

Das gemäß der Erfindung verwendete neuronale Netz RCNN muss zwei unterschiedliche Aufgaben erfüllen. Zum einen muss es die Dynamik des zugrunde liegenden technischen System identifizieren und zum anderen muss es eine optimale Steuerung des technischen Systems mit Hilfe einer entsprechenden Aktionsauswahl- bzw. Belohnungsregel erreichen. Das Netz wird somit in zwei aufeinander folgenden Schritten trainiert, nämlich einem Schritt zum Lernen des rekurrenten neuronalen Netzes mit Trainingsdaten und einem Schritt zum Lernen einer Belohnungsregel durch Kopplung des rekurrenten neuronalen Netzes mit einem Feed-Forward-Netz. Dieser erfindungsgemäße Ansatz unterscheidet sich von herkömmlichen Verfahren, bei denen ein kombiniertes Lernen beider Aufgaben in einem Schritt versucht wird.

In dem ersten Schritt des erfindungsgemäßen Verfahrens wird zunächst die Dynamik des zugrunde liegenden Markov Entscheidungsprozesses modelliert, der dem dynamischen Verhalten eines technischen Systems entspricht. Das Netzwerk RCNN wird demzufolge auf ein rekurrentes neuronales Netz RNN mit dynamisch konsistenter zeitlicher Entfaltung unter Berücksichtigung zukünftiger Zustände reduziert. Dieser erste Schritt wird mathematisch durch folgende Gleichungen repräsentiert:

$$s_\tau = \tanh(\mathbf{I}p_\tau + Da_\tau + \theta) \quad (1)$$

$$x_{\tau+1} = Cs_\tau \quad (2)$$

mit

$$p_\tau = As_{\tau-1} + Bx_\tau \quad (3)$$

$$\sum_t \sum_\tau (x_\tau - x_\tau^d)^2 \rightarrow \min_{A,B,C,D,\theta} \quad (4)$$

Die letzte Gleichung stellt hierbei die Aufgabe des Trainings dar, bei dem erreicht werden soll, dass ein Zustand $x_\tau$, der durch das rekurrente neuronale Netz RNN bestimmt ist, möglichst gut mit dem Zustand $x_\tau^d$ der Trainingsdaten übereinstimmt. Es wird hierbei eine Minimierung des quadratischen Fehlers in Bezug auf die Matrizen A, B, C und D und den Bias θ vorgenommen, welche die zu bestimmenden Parameter des rekurrenten neuronalen Netzes darstellen.

Nach dem ersten Schritt des Modellierens der Dynamik des technischen Systems werden die in diesem Schritt bestimmten Matrizen A, B, C und D sowie der Bias θ festgehalten, d.h. ihre Gewichte werden während des weiteren Trainings nicht verändert. Es werden nunmehr die Matrizen E und F sowie der Bias b aktiviert, welche in Fig. 2 dargestellt sind. Dies sind die einzigen Parameter während des zweiten Schritts des Lernens der Belohnungsregel. In diesem Lernschritt erhält das rekurrente neuronale Netz keine zukünftige Aktionen als externe Eingaben, sondern diese Aktionen werden mit dem Feed-Forward-Netz unter Berücksichtigung der Belohnungsregel gelernt. Darüber hinaus werden für vergangene Zeitschritte $\tau < t$ die Ausgabecluster $x_\tau$ weggelassen, da sie nur für die Modellierung der Dynamik im ersten Schritt benötigt wurden. Für zukünftige Zeitschritte $\tau > t$ des Netzwerkes wird die Fehlerfunktion gemäß Gleichung (4) ersetzt durch die Belohnungs- bzw. Kostenfunktion c(·), welche weiter unten in Gleichung (9) genannt ist. Dies wird in der Architektur durch die zusätzlichen Belohnungscluster $R_\tau$ erreicht, welche mit den Ausgabeclustern durch eine problemspezifische feste Matrix G, welche von der oben erwähnten Belohnungsfunktion c(·) abhängt, sowie einer möglichen Aktivierungsfunktion h innerhalb der Ausgabecluster $X_\tau$ verbunden sind. Somit wird durch das Netz RCNN die Belohnungsfunktion c(·) innerhalb der neuronalen Architektur codiert. Dies bedeutet, dass der Belohnungscluster $R_\tau$ nicht nur auf der Basis des Ausgabeclusters $x_\tau$ berechnet werden muss, sondern dass er auch allgemeiner beschrieben werden kann, wodurch auch kompliziertere Netzwerk-Architekturen ermöglicht werden. Beispielsweise kann die Belohnungsfunktion explizit gelernt werden, was insbesondere dann hilfreich ist, wenn c(·) nicht bekannt ist oder nur unvollständig spezifiziert ist. Dies kann durch ein weiteres zusätzliches dreischichtiges neuronales Netz mit der Ausgabe des RCNN als Eingaben erreicht werden.

Die Gewichte des Feed-Forward-Netzes werden nur gemäß der zurückpropagierten Belohnung von den Belohnungsclustern $R_\tau$ ($\tau >$ t) adaptiert. Dies entspricht der Idee, dass der zweite Schritt des Lernens der Aktionsauswahlregel nicht zur Identifikation der Dynamik dient, sondern nur zum Lernen einer Regel, welche die Belohnung maximiert, wobei die Dynamik des Systems bereits zuvor modelliert wurde.

Der zweite Schritt des Lernens der Belohnungsregel kann durch die nachfolgenden Gleichungen (5) bis (9) mathematisch wiedergegeben werden. Dabei werden die Matrizen E und F sowie der Bias b gelernt. Die Gleichungen (5) bis (9) lauten wie folgt:

$$s_\tau = \tanh(\mathbf{I}p_\tau + Da_\tau + \theta) \quad (5)$$

$$R_{\tau+1} = Gh(Cs_{\tau}) \quad \text{für alle } \tau > t \tag{6}$$

mit

$$p_{\tau} = As_{\tau-1} + Bx_{\tau} \tag{7}$$

und

$$a_{\tau} = f(F \tanh(Ep_{\tau} + b)) \quad \text{für alle } \tau > t \tag{8}$$

$$\sum_{t} \sum_{\tau > t} c(R_{\tau}) \rightarrow \min_{E,F,b} \tag{9}$$

Sowohl bei der Modellierung der Dynamik des technischen Systems gemäß den Gleichungen (1) bis (4) als auch bei dem Lernen der Belohnungsregel gemäß Gleichungen (5) bis (9) wird das rekurrente neuronale Netz mit den gleichen Trainingsmustern T und mit einem hinlänglich aus dem Stand der Technik bekannten Backpropagation-Verfahren gemäß Druckschrift [1] trainiert. Jedes Trainingsmuster T entspricht hierbei einem Zeitpunkt, dem entsprechende Trainingsdaten in der Form des Zustands des technischen Systems und der durchgeführten Aktion zu diesem Zeitpunkt zugeordnet sind. Der Schritt des Lernens der Belohnungsregel kann hierbei als Rückwärtspropagation des Fehlers der Belohnungsfunktion $c(\cdot)$ angesehen werden. Die im Vorangegangenen beschriebene Ausführungsform des rekurrenten neuronalen Kontrollnetzwerks RCNN kombiniert in idealer Weise die Vorteile eines rekurrenten neuronalen Netzes RNN mit dynamisch konsistenter zeitlicher Entfaltung unter Berücksichtigung zukünftiger Zustände zur Identifikation der Dynamik mit einem dreischichtigen neuronalen Kontrollnetz zum Lernen der Belohnungsregel. Auf diese Weise wird eine hohe Approximationsgenauigkeit erreicht, und es können auch komplexe dynamische Systeme auf sehr dateneffiziente Weise gesteuert werden. Zusätzlich kann das System auf einfache Weise zu höheren Dimensionen skaliert werden, und eine nur teilweise beobachtbare Umgebung aus Zuständen des technischen Systems kann rekonstruiert werden. Ferner können mit dem Netz sehr gut kontinuierliche Zustandsräume und Aktionsräume verarbeitet werden.

Die obige Ausführungsform des rekurrenten neuronalen Netzes wurde am Beispiel des hinlänglich aus dem Stand der Technik bekannten Cart-Pole-Problems getestet. Das Cart-Pole-Problem ist hierbei in Fig. 3 wiedergegeben. Es besteht aus einem Wagen 1, der sich in horizontaler Richtung in einer Mulde 2 bewegt, welche durch vertikale Wände 2a begrenzt ist. Die Position des Wagens wird hierbei in Bezug auf die Mitte der Mulde mit der Variablen $\chi$ beschrieben. Der Wagen balanciert auf seiner Oberseite eine Stange 3, deren Position in Bezug auf die Vertikale mit dem Winkel $\alpha$ beschrieben wird. Das System wird somit durch die folgenden vier Variablen zu den entsprechenden Zeitpunkten $t = 1,...,T$ beschrieben:

$x_t$ := horizontale Wagenposition
$\dot{x}_t$ := horizontale Wagengeschwindigkeit
$\alpha_t$ := Winkel zwischen Stange und der Vertikalen
$\dot{\alpha}_t$ := Winkelgeschwindigkeit der Stange

Die Dynamik des Systems ist durch folgende physikalische Gleichungen gegeben:

$$\begin{bmatrix} M+m & ml\cos\alpha_t \\ ml\cos\alpha_t & \frac{3}{4}ml^2 \end{bmatrix} \cdot \begin{bmatrix} \ddot{x}_t \\ \ddot{\alpha}_t \end{bmatrix} - \begin{bmatrix} ml\dot{\alpha}_t^{\,2}\sin\alpha_t \\ mgl\sin\alpha_t \end{bmatrix} = \begin{bmatrix} F \\ 0 \end{bmatrix} \qquad (10)$$

Hierbei ist M die Masse des Wagens 1 und m die Masse der Stange 3. 1 entspricht der halben Länge der Stange, g ist die Gravitationsbeschleunigung und F ist die Kraft, welche auf den Wagen in horizontaler Richtung ausgeübt wird. Diese Kraft ist auch in Fig. 3 gezeigt.

Das Ziel des Cart-Pole-Problem ist, die Stange für eine möglichst lange Folge an Zeitschritten auf dem Wagen zu balancieren, ohne dass der Wagen an die Wände 2a stößt. Mögliche Aktionen sind das Verschieben des Wagen nach links oder nach rechts mit einer konstanten Kraft F. Gemäß dem ursprünglichen Cart-Pole-Problem wurde das System mit einem negativen bestärkenden Signal bestraft, wenn der Wagen eine der Wände 2a berührt bzw. wenn der Stab um mehr als 12° verkippt ist. In allen anderen Fällen wurde eine Belohnung von Null vergeben. Das Cart-Pole-Problem wurde durch bekannte bestärkende Lernverfahren vollständig gelöst, wobei hierfür jedoch eine große Anzahl von Trainingsdaten erforderlich war. Im Folgenden wird die Lösung des Cart-Pole-Problems auf der Basis des erfindungsgemäßen Netzwerks RCNN beschrieben. Es wurde hierbei ein rekurrentes neuronales Netz mit dynamisch konsistenter zeitlicher Entfaltung unter Berücksichtigung von zukünftigen Zuständen verwendet, wobei 10 Schritte in die Vergangenheit und 30 Schritte in die Zukunft entfaltet wurde. Hierdurch wird dem Netzwerk zum einen ein Gedächtnis gegeben, welches ausreichend ist, die Dynamik des Systems zu identifizieren, und andererseits wird dem Netzwerk ein zukünftiger Überschuss gegeben, der es ermöglicht, die Konsequenzen von gewählten Aktionen vorherzusagen. Die Dimension für die Zustände der versteckten Schicht im rekurrenten neuronalen Netz wurde auf 20 Neuronen gesetzt, und die Dimension für die versteckte Schicht R des Kontrollnetzes wurde auf 40 Neuronen festgesetzt. Wie oben bereits beschrieben, wurde der Tangens Hyperbolicus als eine Aktivierungsfunktion der Cluster $a_\tau$ eingesetzt (siehe Gleichung (8)). Hierdurch wurde der Aktionsraum des Netzwerkes RCNN auf [-1,1] beschränkt.

Zum Lernen des rekurrenten neuronalen Netzes wurden Daten von unterschiedlicher Größe gemäß der Gleichung (10) erzeugt, wobei die Aktionen (d.h. die Kraft F) zufällig gewählt wurden. Als Kostenfunktion wurde eine Funktion gewählt, welche das obige Ziel der Vermeidung eines Verkippens der Stange bzw. eines Anstoßens des Wagens an die Wände 2a wiedergibt. Die Belohnungsfunktion wurde wie folgt gewählt:

$$c = \sum_{t} \sum_{r>t} -(g \cdot \chi_\tau + \alpha_\tau)^2 \qquad (11)$$

Hierbei ist g ein Skalierungsfaktor, der die Fehlerwerte der zwei Variablen $\chi_\tau$ und $\alpha_\tau$ balanciert. Er wurde hierbei g = 0,1 festgelegt. Demzufolge ergab sich die Matrix G aus Gleichung (6) wie folgt:

$$G = \begin{bmatrix} 0{,}1 & 0 & 0 & 0 \\ 0 & 0 & 1 & 0 \end{bmatrix} \qquad (12)$$

Als Aktivierungsfunktion h gemäß Gleichung (6) wurde hierbei die Identitätsfunktion verwendet. Das rekurrente neuronale Netz sowie das Feed-Forward-Netz wurden mit dem oben genannten Backpropagation-Verfahren gemäß der Druckschrift [1] gelernt.

Im Folgenden werden die Ergebnisse des erfindungsgemäßen Verfahrens zur Lösung des Cart-Pole-Problems im Vergleich zu den Ergebnissen mit anderen Lernverfahren diskutiert.

Das erfindungsgemäße neuronale Netz RCNN wurde mit unterschiedlichen Trainingsdaten trainiert. Die dadurch gelernte Belohnungsregel gemäß Gleichung (11) wurde für das Cart-Pole-Problem getestet, wobei in jedem Test die Anzahl an Schritten N ermittelt wurde, welche der Anzahl an Schritten entspricht, wie lange die Stange 3 auf dem

Wagen 1 balanciert wird, ohne dass der Wagen die Wände 2a anfährt. Zum Lernen der Belohnungsregel wurden jeweils drei Datensätze mit 300, 1000, 3000, 10000, 30000 und 100000 Trainingswerten verwendet. Anschließend wurde für jede Datensatzgröße der Median ME und der Durchschnitt AV der Schritte N über 100 unterschiedliche zufällige Initialisierungen des Wagens und der Stange während des Tests ermittelt. Der Median ist hierbei bei Aneinanderreihung von allen ermittelten Anzahlen N in aufsteigender Reihenfolge der mittlere Wert in dieser Reihenfolge. Der Durchschnitt ist das arithmetische Mittel von allen ermittelten Anzahlen N. Es wurde eine Maximalanzahl an Schritten N auf max = 100000 festgelegt, was dahingehend gewertet wurde, dass das Cart-Pole-Problem bei diesem Test gelöst wurde.

Fig. 4 zeigt eine Tabelle, in der für die einzelnen Datensatzgrößen DS der Median ME und der Durchschnitt AV für das erfindungsgemäße Verfahren mit dem Netz RCNN sowie für andere bekannte Algorithmen, nämlich dem adaptiven heuristischen Kritik-Algorithmus AHC und dem Q-Learning-Algorithmus Q-L, angegeben sind. Es ist bekannt, dass der AHC-Algorithmus gute Ergebnisse bei dem Cart-Pole-Problem liefert. Der Q-Learning-Algorithmus ist eine Standardmethode für Reinforcement Learning.

Wie sich aus der Tabelle gemäß Fig. 4 ergibt, löst das erfindungsgemäße Verfahren mit dem neuronalen Netz RCNN das Cart-Pole-Problem sehr dateneffizient und deutlich besser als die anderen Verfahrens. Insbesondere ist bereits bei 1000 Trainingswerten die durchschnittliche Anzahl an Schritten, bei denen die Stange balanciert ist, sehr groß, die Anzahl liegt bei 33573. Mit einem der Trainingsdatensätze konnte bereits bei einer Datensatzgröße von 1000 die Belohnungsregel gelernt werden. Im Vergleich hierzu brauchte der AHC-Algorithmus eine Datensatzgröße von wenigstens 100000 Datenwerten, um eine gute Lösung zu finden. Die Ergebnisse des Q-Learning-Verfahrens waren noch wesentlich schlechter und es wurde bei diesem Verfahren mit keinem Datensatz die Maximalanzahl max an Schritten erreicht. Zur Verdeutlichung sind die Ergebnisse der Tabelle in Fig. 4 auch nochmals graphisch mit logarithmischer Skala in Fig. 5 und Fig. 6 dargestellt. In Fig. 5 ist entlang der Abszisse die Datensatzgröße DS und entlang der Ordinate der Median ME für die drei Lernverfahren angedeutet, wobei das erfindungsgemäße Verfahren RCNN als durchgezogene Linie, das AHC-Verfahren als gepunktete Linie und Q-Learning-Verfahren als gestrichelte Linie wiedergegeben sind. Die Darstellung der Fig. 6 entspricht der Darstellung der Fig. 5 mit dem einzigen Unterschied, dass entlang der Ordinate nunmehr der Durchschnitt AV aufgetragen ist. Man erkennt deutlich aus den beiden Figuren 5 und 6, dass das erfindungsgemäße Verfahren bessere Ergebnisse als die Verfahren nach dem Stand der Technik liefert.

Obwohl das erfindungsgemäße Verfahren nur in Bezug auf das Cart-Pole-Problem getestet wurde, ist es nicht nur auf dieses Problem beschränkt. Es kann insbesondere auf jedes beliebige technische System angewendet werden, in dem beliebige Arten von Zuständen gemessen werden können und in dem beliebige Arten von Aktionen in der Form von Veränderung von Stellgrößen durchgeführt werden können.

Literaturverzeichnis:

[1] D.E. Rumelhart, G.E. Hinton, and R.J. Williams, "Learning internal representations by error propagation", in Parallel Distributed Processing: Explorations in The Microstructure of Cognition, D.E. Rumelhart and J.L.M. et al., Eds. Cambridge: MIT Press, 1986, vol. 1, pp. 318-362

[2] Leslie Pack Kaelbling; Michael L. Littman; Andrew W. Moore, Reinforcement Learning: A Survey, Journal of Artificial Intelligence Research 4 (1996) pp. 237-28

[3] Long-Ji Lin: "Reinforcement Learning for Robots Using Neural Networks" School of Computer Science, Carnegie Mellon University, 6. Januar 1993 (1993-01-06), XP002473299, Pittsburgh, PA 15213


**Patentansprüche**

**1.** Verfahren zur rechnergestützten Steuerung und/oder Regelung eines technischen Systems, bei dem:

a) das dynamische Verhalten des technischen Systems für mehrere Zeitpunkte (t) jeweils durch einen Zustand ($x_t$) des technischen Systems und eine am technischen System durchgeführte Aktion ($a_t$) charakterisiert wird, wobei eine jeweilige Aktion ($a_t$) zu einem jeweiligen Zeitpunkt (t) in einen neuen Zustand ($x_{t+1}$) des technischen Systems zum nächsten Zeitpunkt (t+1) führt;
b) das dynamische Verhalten des technischen Systems mit einem rekurrenten neuronalen Netz mit Hilfe von Trainingsdaten umfassend bekannte Zustände ($x_t$) und Aktionen ($a_t$) zu mehreren Zeitpunkten (t) modelliert wird, wobei das rekurrente neuronale Netz gebildet ist durch wenigstens eine Eingangsschicht (I) umfassend die Zustände ($x_t$) des technischen Systems und die am technischen System durchgeführten Aktionen ($a_t$) zu

den mehreren Zeitpunkten (t), wenigstens eine versteckte rekurrente Schicht (H) umfassend versteckte Zustände ($s_t$, $p_t$) und wenigstens eine Ausgangsschicht (O) umfassend die Zustände ($x_t$) des technischen Systems zu den mehreren Zeitpunkten (t);

c) nach Durchführung von Schritt b) eine Aktionsauswahlregel gelernt wird, indem das rekurrente neuronale Netz für einen aktuellen und zukünftige Zeitpunkte (t) mit einem weiteren neuronalen Netz umfassend wenigstens eine Eingangsschicht (H), wenigstens eine versteckte Schicht (R) umfassend versteckte Zustände ($r_t$) und wenigstens eine Ausgangsschicht (O') gekoppelt wird, wobei die Eingangsschicht (H) des weiteren neuronalen Netzes zu einem jeweiligen Zeitpunkt (t) wenigstens einen Teil der versteckten Zustände ($p_t$) des rekurrenten neuronalen Netzes zu dem jeweiligen Zeitpunkt (t) umfasst und die Ausgangsschicht (O') des weiteren neuronalen Netzes zu dem jeweiligen Zeitpunkt die am technischen System durchgeführte Aktion ($a_t$) zu dem jeweiligen Zeitpunkt umfasst;

d) am technischen System durchzuführende Aktionen ($a_t$) durch das mit dem weiteren neuronalen Netz gekoppelte rekurrente neuronale Netz mit gelernter Aktionsauswahlregel bestimmt werden.

**2.** Verfahren nach Anspruch 1, bei dem die Auswahlregel gemäß einer Bewertungsfunktion gelernt wird, welche ein oder mehrere Kriterien in Bezug auf die Zustände ($x_t$) des technischen Systems und/oder die am technischen System durchgeführten Aktionen ($a_t$) berücksichtigt und/oder welche in Schritt b) gelernt wird.

**3.** Verfahren nach Anspruch 2, bei dem die Bewertungsfunktion derart gewählt ist, dass sie ein optimales dynamisches Verhalten des technischen Systems parametrisiert.

**4.** Verfahren nach Anspruch 3, bei dem die Bewertungsfunktion durch eine zu optimierende Kostenfunktion repräsentiert wird.

**5.** Verfahren nach einem der vorhergehenden Ansprüche, bei dem ein Zustand ($x_t$) des technischen Systems ein oder mehrere Umgebungsvariablen umfasst und/oder eine am technischen System durchzuführende Aktion ($a_t$) ein oder mehrere Aktionsvariablen umfasst und/oder ein versteckter Zustand ($s_t$, $p_t$, $r_t$) des rekurrenten und/oder des weiteren neuronalen Netzes ein oder mehrere versteckte Variablen umfasst.

**6.** Verfahren nach Anspruch 5, bei dem die Anzahl der versteckten Variablen eines versteckten Zustands ($s_t$, $p_t$, $r_t$) des rekurrenten und/oder des weiteren neuronalen Netzes kleiner ist als die Anzahl der Umgebungsvariablen eines Zustands ($x_t$) des technischen Systems.

**7.** Verfahren nach einem der vorhergehenden Ansprüche, bei dem zur Modellierung des dynamischen Verhaltens des technischen Systems mit dem rekurrenten neuronalen Netz der Fehler zwischen den durch das rekurrente neuronale Netz bestimmten Zuständen ($x_t$) und der Zustände ($x_t^d$) der Trainingsdaten minimiert wird.

**8.** Verfahren nach einem der vorhergehenden Ansprüche, bei dem in Schritt b) des Anspruchs 1 ein nichtlineares dynamisches Verhalten des technischen Systems modelliert wird und/oder in Schritt c) des Anspruchs 1 eine nichtlineare Aktionsauswahlregel gelernt wird.

**9.** Verfahren nach einem der vorhergehenden Ansprüche bei dem zur Modellierung des dynamischen Verhaltens des technischen Systems mit dem rekurrenten neuronalen Netz in Schritt b) und/oder zum Lernen der Aktionsauswahlregel in Schritt c) ein Backpropagation-Verfahren verwendet wird.

**10.** Verfahren nach einem der vorhergehenden Ansprüche, bei dem das rekurrente neuronale Netz ein Netz mit dynamisch konsistenter zeitlicher Entfaltung unter Berücksichtigung zukünftiger Zustände ($x_t$) und Aktionen ($a_t$) ist.

**11.** Verfahren nach einem der vorhergehenden Ansprüche, bei dem die Modellierung des dynamischen Verhaltens des technischen Systems mit dem rekurrenten neuronalen Netz durch folgende Gleichungen repräsentiert wird:

$$s_\tau = \tanh(\mathbf{I}p_\tau + Da_\tau + \theta)$$

$$x_{\tau+1} = Cs_\tau$$

mit

$$p_\tau = As_{\tau-1} + Bx_\tau$$

$$\sum_t \sum_\tau (x_\tau - x_\tau^d)^2 \to \min_{A,B,C,D,\theta}$$

wobei der Wertebereich von $\tau$ eine vorbestimmte Anzahl m von Zeitschritten vor dem Zeitpunkt t und eine vorbestimmte Anzahl n von Zeitschritten nach dem Zeitpunkt t umfasst;
wobei $t \in \{m,...,T-n\}$, wobei T die Anzahl an Zeitpunkten, für welche Trainingsdaten vorliegen;
wobei $x_\tau$ den durch das rekurrente neuronale Netz bestimmten Zustand des technischen Systems zum Zeitpunkt $\tau$ repräsentiert;
wobei $x_\tau^d$ den Zustand des technischen Systems zum Zeitpunkt $\tau$ gemäß den Trainingsdaten repräsentiert;
wobei $a_\tau$ die Aktion zum Zeitpunkt $\tau$ repräsentiert;
wobei $S_\tau$ und $p_\tau$ den versteckten Zustand zum Zeitpunkt $\tau$ der versteckten Schicht des rekurrenten neuronalen Netzes repräsentieren;
wobei **I** die Einheitsmatrix und A, B, C, D zu bestimmende Matrizen und $\theta$ ein zu bestimmender Bias sind.

**12.** Verfahren nach Anspruch 11, bei dem das Lernen der Aktionsauswahlregel durch folgende Gleichungen repräsentiert wird:

$$s_\tau = \tanh(\mathbf{I}p_\tau + Da_\tau + \theta)$$

$$R_{\tau+1} = Gh(Cs_\tau) \quad \text{für alle } \tau > t$$

mit

$$p_\tau = As_{\tau-1} + Bx_\tau$$

und

$$a_\tau = f(F\tanh(Ep_\tau + b)) \text{ für alle } \tau > t$$

$$\sum_t \sum_{\tau > t} c(R_\tau) \rightarrow \min_{E,F,b}$$

wobei *G* eine Matrix und h eine beliebige Aktivierungsfunktion ist, welche den Zustand $x_{\tau+1}$ des technischen Systems auf einen für die Kostenfunktion $c(\cdot)$ relevanten Zustand $R_{\tau+1}$ abbilden;
wobei f eine beliebige Aktivierungsfunktion ist;
wobei E und F zu bestimmende Matrizen und b ein zu bestimmender Bias sind.

**13.** Verfahren nach einem der vorhergehenden Ansprüche, bei dem das technische System eine Turbine, insbesondere eine Gasturbine, ist.

**14.** Verfahren nach einem der vorhergehenden Ansprüche, bei dem am Anfang des Steuerungsverfahrens zunächst die Schritte a) bis d) des Anspruchs 1 durchgeführt werden und anschließend das sich daraus ergebende mit dem weiteren neuronalen Netz gekoppelte rekurrente neuronale Netz mit gelernter Aktionsauswahlregel zur Bestimmung der Aktionen ($a_t$) verwendet wird.

**15.** Verfahren nach einem der Ansprüche 1 bis 13, bei dem während des Steuerungsverfahrens in regelmäßigen Abständen die Schritte a) bis d) des Anspruchs 1 durchgeführt werden, wobei bei der Durchführung dieser Schritte die sich während der Steuerung neu ergebenden Zustände ($x_t$) und Aktionen ($a_t$) als neue und/oder weitere Trainingsdaten berücksichtigt werden und wobei nach Durchführung dieser Schritte das sich daraus ergebende, mit dem weiteren neuronalen Netz gekoppelte rekurrente neuronale Netz mit gelernter Aktionsauswahlregel zur Auswahl weiterer Aktionen ($a_t$) verwendet wird.

**16.** Computerprogrammprodukt mit einem auf einem maschinenlesbaren Träger gespeicherten Programmcode zur Durchführung des Verfahrens nach einem der vorhergehenden Ansprüche, wenn das Programm auf einem Rechner abläuft.

## Claims

**1.** Method for computer-aided control and/or regulation of a technical system in which:

a) The dynamic behaviour of the technical system is characterised for a number of points in time (t) in each case by a state ($x_t$) of the technical system and by an action ($a_t$) carried out on the technical system, with a respective action ($a_t$) leading at a respective point in time (t) into a new state ($x_{t+1}$) of the technical system at the next point in time (t+1);
b) The dynamic behaviour of the technical system is modelled with a recurrent neural network with the aid of training data comprising states ($x_t$) and actions ($a_t$) determined with the simulation model at a number of times (t), with the recurrent neural network being formed by a least one input layer (I) comprising the states ($x_t$) of the technical system and the actions ($a_t$) carried out on the technical system for the number of times (t), and least one hidden recurrent layer (H) comprising hidden states ($s_t$, $p_t$) and a least one output layer (O) comprising the states ($x_t$) of the technical system for the number of times (t);
c) Following the implementation of step b), an action selection rule is learned by the recurrent neural network for a current and future times (t) being coupled to a further neural network comprising at least one input layer (H), at least one hidden layer (R) comprising hidden states ($r_t$) and at least one output layer (O'), with the input layer (H) of the further neural network at a respective (t) comprising at least one part of the hidden states ($p_t$) of the recurrent neural network at the respective time (t) and the output layer (O') of the further neural network at the respective time comprising the action ($a_t$) carried out on the technical system at the respective point in time;
d) Actions ($a_t$) to be carried out on the technical system are determined by the recurrent neural network coupled to the further neural network with learned action selection rules.

**2.** Method according to claim 1, in which the selection rule is learned in accordance with an evaluation function which takes account of one or more criteria in relation to the states ($x_t$) of the technical system and/or the actions ($a_t$) carried out on the technical system and/or which are learned in step b).

**3.** Method according to claim 2, in which the evaluation function is selected such that it parameterises an optimum dynamic behaviour of the technical system.

**4.** Method according to claim 3, in which the evaluation function is represented by a cost function to be optimised.

**5.** Method according to one of the preceding claims in which a state ($x_t$) of the technical system comprises one or more environment variables and/or an action ($a_t$) to be carried out on the technical system comprises one or more action variables and/or a hidden state ($s_t$, $p_t$, $r_t$) of the recurrent and/or of the further neural network comprises one or more hidden variables.

**6.** Method according to claim 5 in which the number of the hidden variables of a hidden state ($s_t$, $p_t$, $r_t$) of the recurrent and/or of the further neural network is smaller than the number of the environment variables of a state ($x_t$) of the technical system.

**7.** Method according to one of the preceding claims in which, for modelling the dynamic behaviour of the technical system with the recurrent neural network, the error between the states ($x_t$) determined by the recurrent neural network and the states ($x_t^d$) of the training data is minimised.

**8.** Method according to one of the preceding claims in which, in step b) of claim 1 a non-linear dynamic behaviour of the technical system is modelled and/or in step c) of claim 1 a non-linear action selection rule is learned.

**9.** Method according to one of the preceding claims in which, for modelling the dynamic behaviour of the technical system with the recurrent neural network in step b) and/or for learning the action selection rule in step c), a back propagation method is used.

**10.** Method according to one of the preceding claims, in which the recurrent neural network is a network with dynamically consistent overshooting, taking into account future states ($x_t$) and actions ($a_t$).

**11.** Method according to one of the preceding claims, in which the modelling of the dynamic behaviour of the technical system with the recurrent neural network is represented by the following equations:

$$s_\tau = \tanh(\mathbf{I}p_\tau + Da_\tau + \theta)$$

$$x_{\tau+1} = Cs_\tau$$

with

$$p_\tau = As_{\tau-1} + Bx_\tau$$

$$\sum_t \sum_\tau (x_\tau - x_\tau^d)^2 \to \min_{A,B,C,D,\theta}$$

with the range of values of τ comprising a predetermined number m of time steps before the time t and a predetermined number n of time steps after the time t;
with $t \in \{m,...,T-n\}$, with T being the number of times for which training data is present;
with $x_\tau$ representing the state of the technical system determined by the recurrent neural network at time τ ;
with $x_\tau^d$ representing the state of the technical system at time τ in accordance with the training data;
with $a_\tau$ representing the action at time τ ;
with $S_\tau$ and $p_\tau$ representing the hidden state at time τ of the hidden layer of the recurrent neural network;
with **I** being the unity matrix and A, B, C, D being matrices to be determined and θ being a bias to be determined.

**12.** Method according to claim 11 in which the learning of the action selection rule is represented by the following equations:

$$s_\tau = \tanh(\mathbf{I}p_\tau + Da_\tau + \theta)$$

$$R_{\tau+1} = Gh(Cs_\tau) \quad \text{for all } \tau > t$$

with

$$p_\tau = As_{\tau-1} + Bx_\tau$$

and

$$a_\tau = f(F\tanh(Ep_\tau + b)) \quad \text{for all } \tau > t$$

$$\sum_t \sum_{\tau > t} c(R_\tau) \rightarrow \min_{E,F,b}$$

with $G$ being a matrix and h any given activation function which map the state $x_{\tau+1}$ of the technical system onto a state $R_{\tau+1}$ relevant for the cost function $c(\cdot)$ ;
with f being any given activation function;
with E and F being matrices to be determined and b being a bias to be determined.

**13.** Method according to one of the preceding claims, in which the technical system is a turbine, especially a gas turbine.

**14.** Method according to one of the preceding claims in which, at the start of the control function, the steps a) through d) of claim 1 are initially carried out and subsequently the recurrent neural network thus produced coupled to the further neural network is used with the learned action selection rule for determining the actions ($a_t$).

**15.** Method according to one of the claims 1 to 13, in which during the control method, the steps a) through d) are executed at regular intervals, whereby in the execution of these steps the new states ($x_t$) and actions ($a_t$) produced during the control are taken into account as new and/or further training data and whereby after execution of these steps the recurrent neural network thus produced coupled to the further neural network is used with learned action selection rules for selecting further actions ($a_t$).

**16.** A computer program product with program code stored on a machine-readable medium for executing the method

according to one of the preceding claims when the program runs on a computer.

**Revendications**

1. Procédé de commande et/ou de régulation d'un système technique assistées par ordinateur, dans lequel :

    a) le comportement dynamique du système technique est caractérisé, pour plusieurs instants (t), respectivement par un état ($x_t$) du système technique et une action ($a_t$) exécutée sur le système technique, une action respective ($a_t$) à un instant respectif (t) menant à un nouvel état ($x_{t+1}$) du système technique à l'instant suivant (t+1) ;
    b) le comportement dynamique du système technique étant modélisé avec un réseau neuronal récurrent à l'aide de données d'apprentissage comprenant des états ($x_t$) et actions connus ($a_t$) à plusieurs instants (t), le réseau neuronal récurrent étant formé par au moins une couche d'entrée (I) comprenant les états ($x_t$) du système technique et les actions ($a_t$) exécutées sur le système technique aux plusieurs instants (t), au moins une couche récurrente cachée (H) comprenant des états cachés ($s_t$, $p_t$) et au moins une couche de sortie (O) comprenant les états ($x_t$) du système technique aux plusieurs instants (t) ;
    c) après l'exécution de l'étape b), une règle de sélection d'action est apprise par le fait que le réseau neuronal récurrent est couplé pour un instant actuel et des instants (t) futurs à un autre réseau neuronal comprenant au moins une couche d'entrée (H), au moins une couche cachée (R) comprenant des états cachés ($r_t$) et au moins une couche de sortie (O'), la couche d'entrée (H) de l'autre réseau neuronal comprenant, à un instant respectif (t), au moins une partie des états cachés ($p_t$) du réseau neuronal récurrent à l'instant respectif (t) et la couche de sortie (O') de l'autre réseau neuronal comprenant à l'instant respectif l'action ($a_t$) exécutée sur le système technique à l'instant respectif ;
    d) des actions (at) à exécuter sur le système technique sont déterminées par le réseau neuronal récurrent couplé à l'autre réseau neuronal au moyen de la règle de sélection d'action apprise.

2. Procédé selon la revendication 1, dans lequel la règle de sélection s'apprend conformément à une fonction d'évaluation qui tient compte d'un ou de plusieurs critères relatifs aux états ($x_t$) du système technique et/ou aux actions ($a_t$) exécutées sur le système technique et/ou s'apprend à l'étape b).

3. Procédé selon la revendication 2, dans lequel la fonction d'évaluation est choisie de manière telle qu'elle paramétrise un comportement dynamique optimal du système technique.

4. Procédé selon la revendication 3, dans lequel la fonction d'évaluation est représentée par une fonction de coût à optimiser.

5. Procédé selon l'une des revendications précédentes, dans lequel un état ($x_t$) du système technique comprend une ou plusieurs variables d'environnement et/ou une action ($a_t$) à exécuter sur le système technique comprend une ou plusieurs variables d'action et/ou un état caché ($s_t$, $p_t$, $r_t$) du réseau neuronal récurrent et/ou de l'autre réseau neuronal comprend une ou plusieurs variables cachées.

6. Procédé selon la revendication 5, dans lequel le nombre de variables cachées d'un état caché ($s_t$, $p_t$, $r_t$) du réseau neuronal récurrent et/ou de l'autre réseau neuronal est inférieur au nombre de variables d'environnement d'un état ($x_t$) du système technique.

7. Procédé selon l'une des revendications précédentes, dans lequel l'erreur entre les états ($x_t$) déterminés par le réseau neuronal récurrent et les états ($x_t^d$) des données d'apprentissage est minimisée pour modéliser le comportement dynamique du système technique avec le réseau neuronal récurrent.

8. Procédé selon l'une des revendications précédentes, dans lequel, à l'étape b) de la revendication 1, un comportement dynamique non linéaire du système technique est modélisé et/ou, à l'étape c) de la revendication 1, une règle non linéaire de sélection d'action est apprise.

9. Procédé selon l'une des revendications précédentes, dans lequel un procédé de rétropropagation est utilisé pour modéliser le comportement dynamique du système technique avec le réseau neuronal récurrent à l'étape b) et/ou pour apprendre la règle de sélection d'action à l'étape c).

10. Procédé selon l'une des revendications précédentes, dans lequel le réseau neuronal récurrent est un réseau à

déconvolution temporelle dynamiquement consistante compte tenu d'états ($x_t$) et d'actions ($a_t$) futurs.

**11.** Procédé selon l'une des revendications précédentes, dans lequel la modélisation du comportement dynamique du système technique avec le réseau neuronal récurrent est représentée par les équations suivantes :

$$s_\tau = \tanh(\mathbf{I}p_\tau + Da_\tau + \theta)$$

$$x_{\tau+1} = Cs_\tau$$

avec

$$p_\tau = As_{\tau-1} + Bx_\tau$$

$$\sum_t \sum_\tau (x_\tau - x_\tau^d)^2 \to \min_{A,B,C,D,\theta}$$

la plage de valeurs de $\tau$ comprenant un nombre prédéterminé m d'intervalles de temps avant l'instant t et un nombre prédéterminé n d'intervalles de temps après l'instant t ;
avec $t \in \{m, \ldots, T-n\}$, T étant le nombre d'instants pour lesquels on a des données d'apprentissage ;

$x_\tau$ représentant l'état du système technique déterminé par le réseau neuronal récurrent à l'instant $\tau$ ;

$x_\tau^d$ représentant l'état du système technique à l'instant $\tau$ conformément aux données d'apprentissage ;

$a_\tau$ représentant l'action à l'instant $\tau$ ;
$S_\tau$ et représentant $p_\tau$ l'état caché à l'instant $\tau$ de la couche cachée du réseau neuronal récurrent ;
**I** étant la matrice unitaire et A, B, C, D étant des matrices à déterminer et $\theta$ étant un décalage à déterminer.

**12.** Procédé selon la revendication 11, dans lequel l'apprentissage de la règle de sélection d'action est représenté par les équations suivantes :

$$s_\tau = \tanh(\mathbf{I}p_\tau + Da_\tau + \theta)$$

$$R_{\tau+1} = Gh(Cs_\tau) \quad \text{pour tous les } \tau > t$$

avec

$$p_\tau = As_{\tau-1} + Bx_\tau$$

et

$$a_\tau = f(F\tanh(Ep_\tau + b)) \text{ pour tous les } \tau > t$$

$$\sum_t \sum_{\tau>t} c(R_\tau) \rightarrow \min_{E,F,b}$$

*G* étant une matrice et h, une fonction d'activation quelconque qui applique l'état $x_{\tau+1}$ du système technique sur un état $R_{\tau+1}$ pertinent pour la fonction de coût $c(\cdot)$ ;
f étant une fonction d'activation quelconque ;
E et F étant des matrices à déterminer et b, un décalage à déterminer.

**13.** Procédé selon l'une des revendications précédentes, dans lequel le système technique est une turbine, et plus particulièrement une turbine à gaz.

**14.** Procédé selon l'une des revendications précédentes, dans lequel, tout d'abord, les étapes a) à d) de la revendication 1 sont exécutées au début du procédé de commande et, ensuite, le réseau neuronal récurrent qui en résulte et est couplé à l'autre réseau neuronal est utilisé avec la règle de sélection d'action apprise pour déterminer les actions ($a_t$).

**15.** Procédé selon l'une des revendications 1 à 13, dans lequel les étapes a) à d) de la revendication 1 sont exécutées pendant le procédé de commande à intervalles réguliers, les nouveaux états ($x_t$) et actions ($a_t$) résultants pendant la commande étant pris en compte en tant que données d'apprentissage nouvelles et/ou supplémentaires pendant l'exécution de ces étapes et, après l'exécution de ces étapes, le réseau neuronal récurrent qui en résulte et est couplé à l'autre réseau neuronal étant utilisé avec la règle de sélection d'action apprise pour sélectionner d'autres actions ($a_t$).

**16.** Produit de programme informatique avec un code de programme stocké sur un support lisible par machine pour réaliser le procédé selon l'une des revendications précédentes lorsque le programme tourne sur un ordinateur.

FIG 1

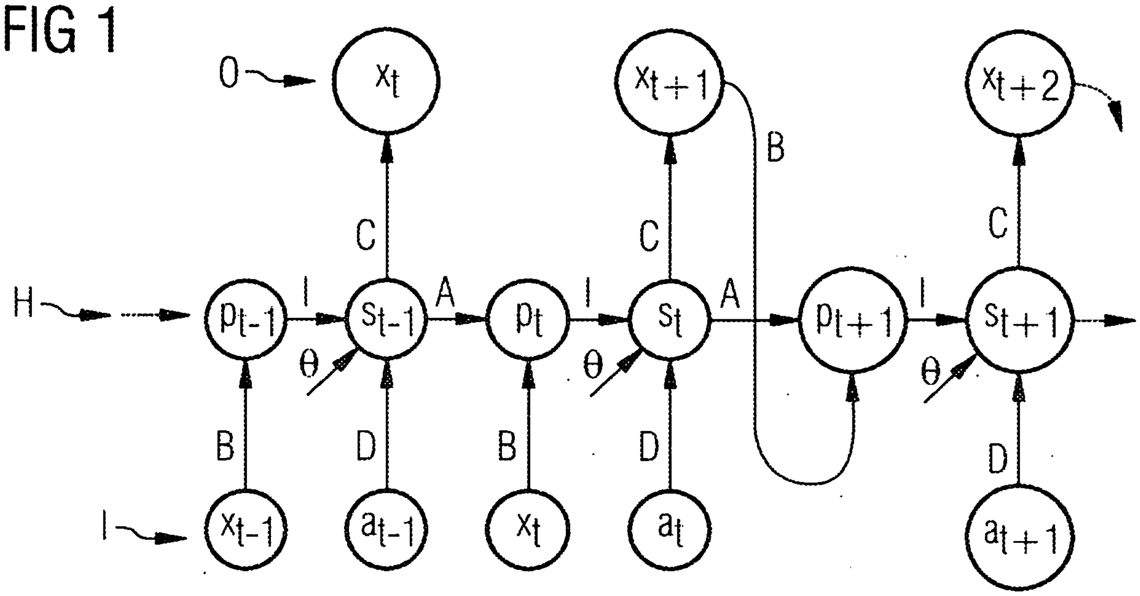
O
$x_t$
$x_{t+1}$
$x_{t+2}$
B
C
C
C
H
$p_{t-1}$
I
$s_{t-1}$
A
$p_t$
I
$s_t$
A
$p_{t+1}$
I
$s_{t+1}$
θ
θ
θ
B
D
B
D
D
I
$x_{t-1}$
$a_{t-1}$
$x_t$
$a_t$
$a_{t+1}$

FIG 2

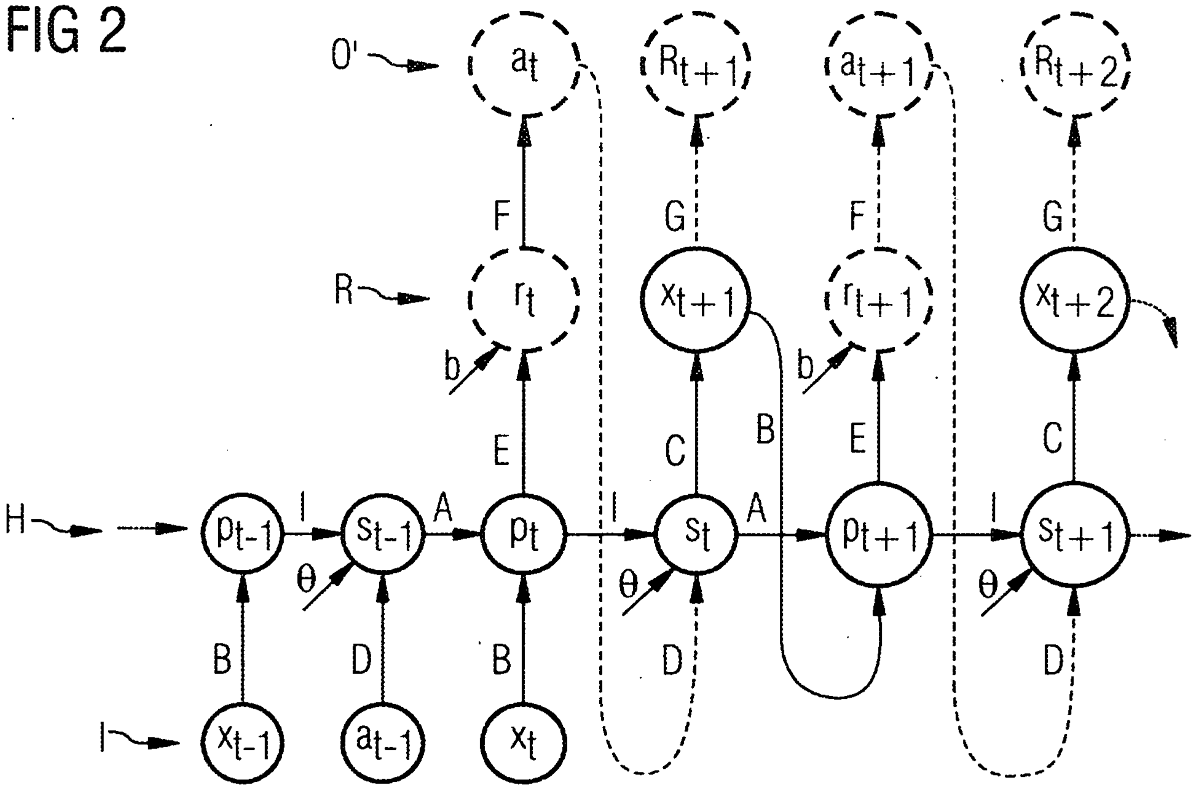
O'
$a_t$
$R_{t+1}$
$a_{t+1}$
$R_{t+2}$
F
G
F
G
R
$r_t$
$x_{t+1}$
$r_{t+1}$
$x_{t+2}$
b
b
E
C
B
E
C
H
$p_{t-1}$
I
$s_{t-1}$
A
$p_t$
I
$s_t$
A
$p_{t+1}$
I
$s_{t+1}$
θ
θ
θ
B
D
B
D
D
I
$x_{t-1}$
$a_{t-1}$
$x_t$

FIG 3

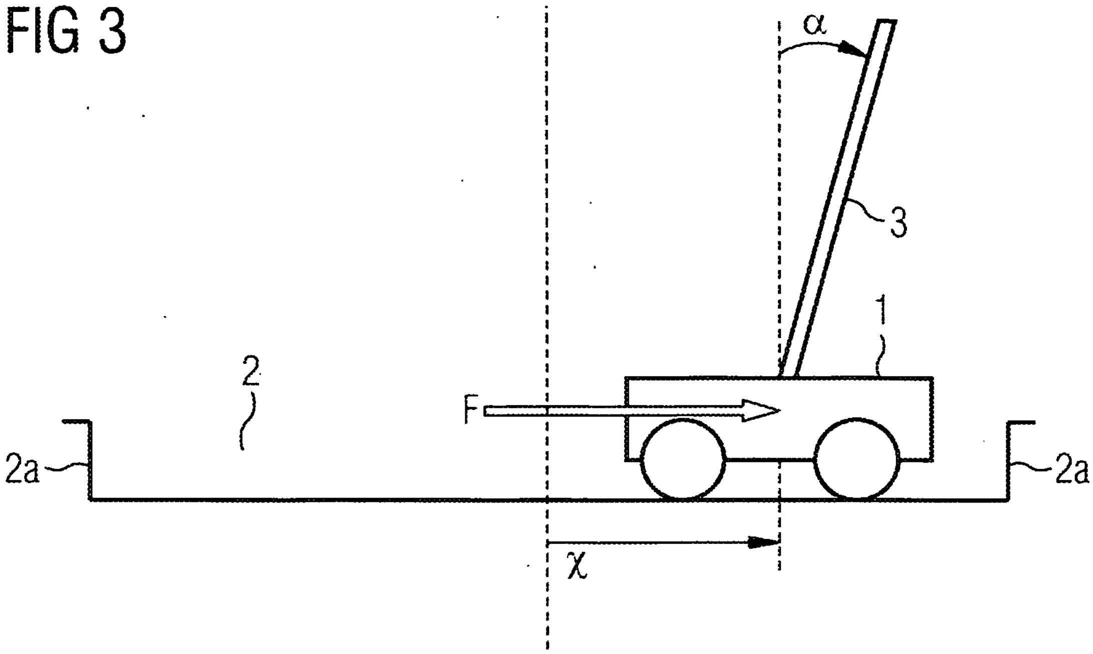


FIG 4

| DS | RCNN | | AHC | | Q-L | |
|---|---|---|---|---|---|---|
| 300 | 61 | 100 | 74 | 56 | 61 | 52 |
| 1000 | 387 | 33573 | 124 | 150 | 121 | 121 |
| 3000 | max | 66912 | 334 | 312 | 111 | 116 |
| 10000 | max | max | 1033 | 1554 | 148 | 163 |
| 30000 | max | max | 2988 | 9546 | 193 | 501 |
| 100000 | max | max | max | 75393 | 503 | 624 |

FIG 5

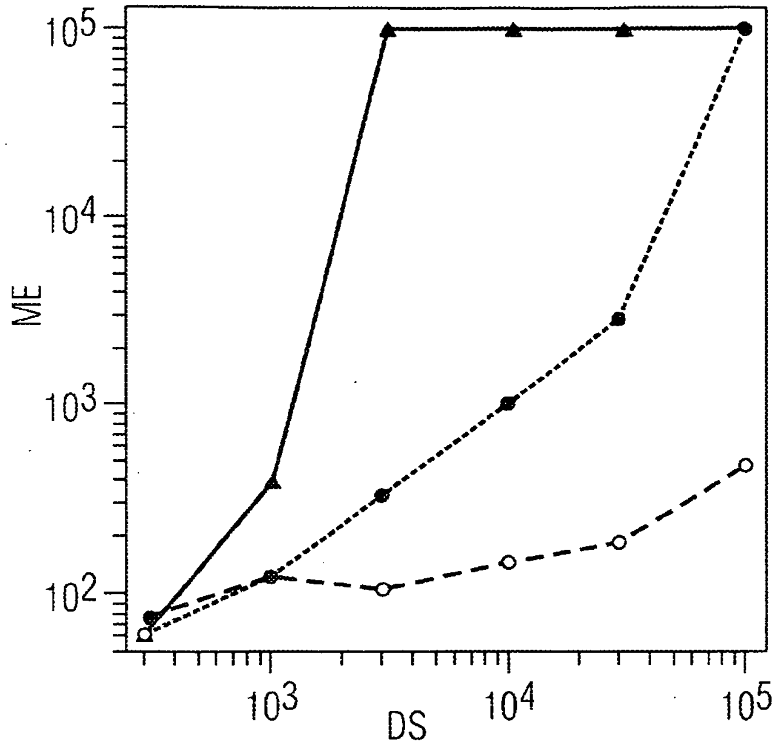
$10^5$
$10^4$
$10^3$
$10^2$
ME
$10^3$
$10^4$
$10^5$
DS

FIG 6

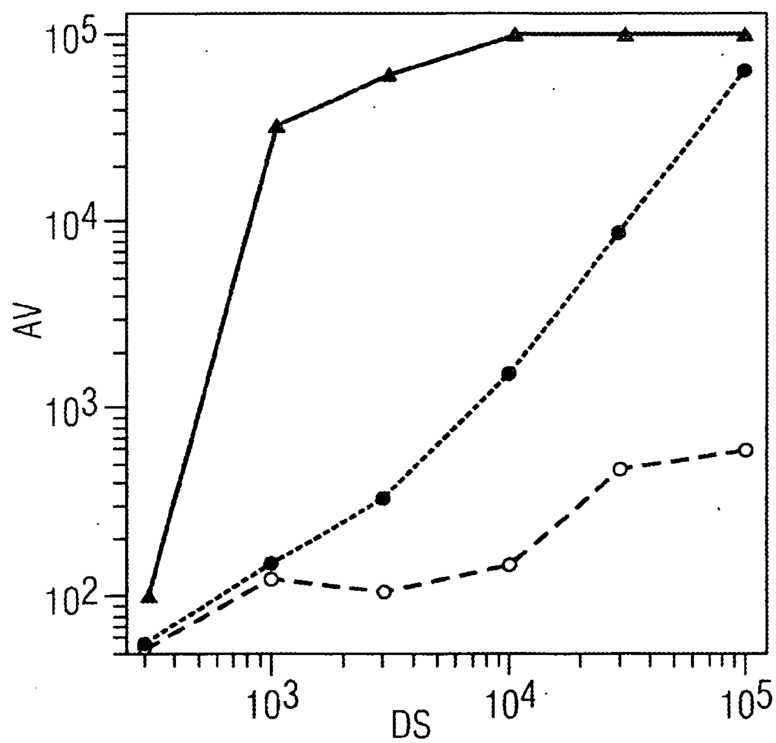
$10^5$
$10^4$
$10^3$
$10^2$
AV
$10^3$
$10^4$
$10^5$
DS

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- Learning internal representations by error propagation. **D.E. RUMELHART ; G.E. HINTON ; R.J. WILLIAMS et al.** Parallel Distributed Processing: Explorations in The Microstructure of Cognition. MIT Press, 1986, vol. 1, 318-362
- **LESLIE PACK KAELBLING ; MICHAEL L. LITTMAN ; ANDREW W. MOORE.** Reinforcement Learning: A Survey. *Journal of Artificial Intelligence Research,* 1996, vol. 4, 237-28
- **LONG-JI LIN.** Reinforcement Learning for Robots Using Neural Networks. *School of Computer Science,* 06. Januar 1993, 15213